# EUROPÄISCHE PATENTSCHRIFT

(11) **EP 3 435 493 B1**
(45) Veröffentlichungstag und Bekanntmachung des Hinweises auf die Patenterteilung: **25.03.2020**
(21) Anmeldenummer: 17183517.6
(22) Anmeldetag: 27.07.2017
(51) Int. Cl.: H01R 13/53, H01B 17/28, H01B 17/54

(54) **STECKBARE HOCHSPANNUNGSDURCHFÜHRUNG UND HOCHSPANNUNGSANLAGE MIT DER STECKBAREN HOCHSPANNUNGSDURCHFÜHRUNG**
PLUG-IN HIGH-VOLTAGE FEED-THROUGH AND HIGH VOLTAGE EQUIPMENT WITH THE PLUGGABLE HIGH-VOLTAGE FEED-THROUGH
TRAVERSÉE DE HAUTE TENSION ENFICHABLE ET INSTALLATION HAUTE TENSION COMPRENANT UN TRAVERSÉE DE HAUTE TENSION ENFICHABLE

(43) Veröffentlichungstag der Anmeldung: 30.01.2019
(73) Patentinhaber: Siemens Aktiengesellschaft, 80333 München (DE)
(72) Erfinder: Engels, Engelbert, 51143 Köln (DE); Langens, Achim, 53797 Lohmar (DE); Schnitzler, Tim, 52372 Kreuzau (DE)

(56) Entgegenhaltungen:
- EP-A1- 2 431 982
- EP-A1- 3 065 147
- DE-A1-102007 022 641
- DE-U1- 7 728 374

## Beschreibung

Die Erfindung betrifft eine steckbare Hochspannungsdurchführung mit einem Innenleiter, der sich in einer Leitungsrichtung zwischen einem Hochspannungsanschluss und einem Steckabschnitt (9) der Hochspannungsdurchführung (1) erstreckt, wobei der Steckabschnitt (9) zum Einstecken der Hochspannungsdurchführung (1) in eine Durchführungsbuchse (2) eines elektrischen Gerätes (3) eingerichtet ist, und einem Isolierkörper, der den Innenleiter zumindest teilweise umschließt.

Im Allgemeinen hat eine solche Hochspannungsdurchführung die Aufgabe, eine sich auf Hochspannungspotential befindende Hochspannungsleitung mit einem stromführenden Stromleiter von einer sich im Wesentlichen auf Erdpotential befindenden Umgebung, beispielsweise einer Wandung des elektrischen Gerätes der Hochspannungsanlage, zu isolieren. Der Innenleiter der Hochspannungsdurchführung bildet dabei einen Teil des Stromleiters aus bzw. ist in diesen eingefügt.

Eine Hochspannungsdurchführung der eingangs genannten Art ist aus der DE 10 2007 022 641 A1 bekannt. Dort ist ein Transformator offenbart, der eine Durchführungsbuchse aufweist, in die eine Hochspannungsdurchführung zum Anschluss des Transformators an ein Hochspannungsnetz einsteckbar ist. Durch die Verwendung einer derartigen steckbaren Hochspannungsdurchführung ist es möglich, den Transformator mit der Hochspannungsdurchführung mit möglichst geringem Montageaufwand aufzubauen und in Betrieb zu nehmen.

Der Steckabschnitt wird beim Einstecken der Hochspannungsdurchführung in die Durchführungsbuchse von einer durch die Durchführungsbuchse gebildeten Ausnehmung aufgenommen.

Der Steckabschnitt der Hochspannungsdurchführung und die Durchführungsbuchse sind derart ausgestaltet, dass ein zuverlässiger elektrischer Kontakt zwischen dem Innenleiter der Hochspannungsdurchführung und der Durchführungsbuchse herstellbar ist, wobei die Durchführungsbuchse mit weiteren Elementen des elektrischen Gerätes elektrisch verbunden ist. Zugleich ist die Verbindung an den Kontaktflächen zwischen der Durchführungsbuchse und dem Steckabschnitt dielektrisch ausreichend verfestigt, so dass ein Betrieb auf Hochspannungsniveau ermöglicht ist.

Eine weitere steckbare Durchführung ist aus der EP 2 431 982 A1 bekannt.

Der vorbekannten Hochspannungsdurchführung haftet jedoch der Nachteil an, dass diese nur für Spannungen im unteren Hochspannungsbereich ausgelegt ist.

Es ist ferner bekannt, dass bei hohen Strömen durch den Innenleiter durch Wärmeverluste Erwärmungen am Innenleiter und Isolierkörper auftreten können, die zu einer Reduzierung der Lebensdauer der Hochspannungsvorrichtung führen können. Aus der DE 10 2011 003 592 A1 ist es bekannt, zur Reduzierung von Temperaturgradienten im Innenleiter und für einen verbesserten Wärmetransport eine verdampfbare Kühlflüssigkeit im Inneren des Innenleiters vorzusehen, der als Hohlleiter ausgebildet ist. Die Reduktion des Temperaturgradienten innerhalb der Hochspannungsdurchführung erhöht deren Zuverlässigkeit im Betrieb. Die aus der DE 10 2011 003 592 A1 bekannte Hochspannungsdurchführung ist nicht steckbar ausgebildet und verfügt dementsprechend nicht über einen einsteckbaren Steckabschnitt für eine Durchführungsbuchse.

Auch die EP 3 065 147 A1 offenbart eine Durchführung mit einer heatpipe im Innenleiter.

Die Aufgabe der Erfindung ist es, eine artgemäße Hochspannungsdurchführung vorzuschlagen, die im höheren Hochspannungsbereich zuverlässig einsetzbar ist.

Die Aufgabe wird durch eine steckbare Hochspannungsdurchführung gemäß Anspruch 1 gelöst.

Die Kühlflüssigkeit kann im Leiterhohlraum an heißen Orten verdampfen und anschließend an kühlen Orten kondensieren. Auf diese Weise wird nach dem Prinzip einer heat pipe der Wärmetransport im Innenleiter bis in den Steckabschnitt ermöglicht. Dem Innenleiter wird an seinen heißen Stellen Wärme entnommen, die an kälteren Stellen wieder abgegeben wird. Auf diese Weise kann die Zuverlässigkeit der Hochspannungsdurchführung vorteilhaft erhöht werden.

Die Erfindung beruht insbesondere auf der Erkenntnis, dass bei einer steckbaren Hochspannungsdurchführung eine thermische Belastung aufgrund hoher Betriebsströme auch im Bereich der Durchführungsbuchse und des Steckabschnitts der Hochspannungsdurchführung auftreten kann.

Zur weiteren Erhöhung der Zuverlässigkeit und zur Ertüchtigung der steckbaren Hochspannungsdurchführung für höhere Spannungsstufen wird demnach vorgeschlagen, dass ein Wärmerohr, das im Innenleiter ausgebildet ist, sich dabei weiter in den Steckabschnitt erstreckt. Das Wärmerohr umfasst zweckmäßigerweise einen Hohlraum, in dem die Kühlflüssigkeit sich befindet. Der Hohlraum kann beispielsweise vom Innenleiter zumindest teilweise begrenzt sein, womit der Innenleiter zumindest teilweise das Wärmerohr ausbildet. Es können auch beispielsweise zwei oder mehr Teilhohlräume vorgesehen sein, die zusammen den Hohlraum des Wärmerohres definieren. Der eine Teilhohlraum ist dann beispielsweise im Innenleiter, der andere Teilhohlraum im Steckabschnitt ausgebildet, wobei die Teilhohlräume miteinander verbunden sind, so dass ein Austausch der Kühlflüssigkeit zwischen ihnen ermöglicht ist. Auf diese Weise kann der Temperaturgradient auch im Bereich des Steckabschnittes minimiert werden. Dies erhöht vorteilhaft die Zuverlässigkeit der gesamten steckbaren Hochspannungsdurchführung. Zudem kann die Hochspannungsdurchführung bei einer entsprechenden Auslegung ihrer übrigen Elemente bei Spannungen oberhalb von 500 kV eingesetzt werden.

Geeigneterweise befindet sich der Steckabschnitt an einem ersten axialen Ende der Hochspannungsdurchführung, das einem zweiten axialen Ende gegenüber liegt, an dem ein Freiluftanschluss der Hochspannungsdurchführung angeordnet ist.

Gemäß der Erfindung umfasst die Hochspannungsdurchführung ein Kontaktsystem zur elektrischen Kontaktierung der Hochspannungsdurchführung mit einem Anschlussteil der Durchführungsbuchse, wobei sich das Wärmerohr bis in den Bereich des Kontaktsystems erstreckt. Das Kontaktsystem kann beispielsweise aus Kontaktlamellen, Vorsprüngen oder dergleichen Elementen bestehen, die eine zuverlässige elektrische und/oder mechanische Kontaktierung zwischen der Hochspannungsdurchführung bzw. dem Innenleiter oder weiteren an den Innenleiter angeschlossenen Bauteilen und dem Anschlussteil und damit des elektrischen Gerätes bereitstellen kann. Im Betrieb der Hochspannungsdurchführung stellt das Kontaktsystem eine kritische Komponente bezüglich der Wärmeentwicklung dar. Ist ein Leiterhohlraum vorgesehen, der sich in den Bereich des Kontaktsystems erstreckt, so kann diese kritische Komponente der Hochspannungsdurchführung gekühlt werden, was die Zuverlässigkeit der Hochspannungsdurchführung weiter erhöht. Zweckmäßigerweise erstreckt sich der Leiterhohlraum axial zumindest bis zu einem Anbringungsort des Kontaktsystems.

Vorzugsweise umfasst der Isolierkörper konzentrisch um den Innenleiter angeordnete, leitende Steuereinlagen, wobei die Steuereinlagen durch Isolierlagen voneinander getrennt sind. Eine solche Durchführung wird im Allgemeinen als kapazitiv gesteuerte Durchführung bezeichnet. Die kapazitiven Steuereinlagen ermöglichen eine gleichmäßige Feldsteuerung und erhöhen damit die Zuverlässigkeit der Hochspannungsdurchführung, insbesondere bei hohen Spannungen. Die Isolierlagen können beispielsweise Papier und/oder Vlies umfassen.

Bevorzugt umfasst der Isolierkörper ein ausgehärtetes Harz. Beispielsweise kann die Hochspannungsdurchführung während des Herstellungsprozesses, beispielsweise nach einem Aufwickeln der Isolierlagen, in ein aushärtbares Harz getränkt werden. Nach dem Aushärten des Harzes kann damit ein verbessert isolierter Isolierkörper erhalten werden. Die Isolierkörper liegt dabei in Form eines kompakten Blocks vor, so dass auf eine Hauptisolation mit einem Gas verzichtet werden kann.

Um die Feldsteuerung auch im Verbindungsbereich zwischen der Hochspannungsdurchführung und der Durchführungsbuchse zu ermöglichen, wird als vorteilhaft angesehen, wenn zumindest einige der Steuereinlagen sich in den Steckabschnitt der Hochspannungsdurchführung hinein erstrecken. Auf diese Weise kann das elektrische Feld auch in Steckabschnitt effektiv gesteuert werden, so dass der sensible Bereich der Verbindung zwischen der Durchführungsbuchse und der Hochspannungsdurchführung verbesserte elektrische Eigenschaften aufweist.

Vorzugsweise weist der Steckabschnitt eine Außenbeschichtung aus einem Silikonmaterial auf. Die Außenbeschichutung kann sich beispielsweise auf einen Teil der Außenoberfläche des Steckabschnitts erstrecken, bevorzugt auf denjenigen Teil der beim Einstecken der Hochspannungsdurchführung in die Durchführungsbuchse mit ihr in Kontakt steht. Die Beschichtung erlaubt eine besonders gute dielektrische Verfestigung der beim Einstecken entstehenden Fuge. Anstelle der Außenbeschichtung aus Silikon kann auch ein anderes geeignetes elastisches, elektrisch isolierendes Beschichtungsmaterial verwendet werden.

Vorzugsweise ist die Kühlflüssigkeit entionisiertes Wasser. Entionisiertes Wasser ist eine besonders einfach zu beschaffende und kostengünstige Kühlflüssigkeit.

Bevorzugt umfasst die Hochspannungsdurchführung ferner einen Befestigungsflansch zur Befestigung der Hochspannungsdurchführung an einem Gehäuse des elektrischen Geräts.

Gemäß einer Ausführungsform der Erfindung ist der Innenleiter als Hohlleiter ausgebildet, wobei der Hohlleiter an einer ersten Stirnseite gasdicht abgeschlossen ist, und wobei sich an eine zweite Stirnseite des Hohlleiters ein Anschlussleiterabschnitt des Steckabschnitts anschließt, wobei der Anschlussleiterabschnitt dazu eingerichtet ist, in Zusammenwirkung mit einem Kontaktsystem der Hochspannungsdurchführung einen elektrischen Kontakt zwischen der Hochspannungsdurchführung und der Durchführungssteckbuchse herzustellen, und der Anschlussleiterabschnitt einen zur zweiten Stirnseite des Hohlleiters offenen Teilhohlraum aufweist, der einen Hohlraum des Wärmerohrs teilweise ausbildet. Demnach bildet der Hohlleiter selbst zumindest teilweise das Wärmerohr. Der Anschlussleiterabschnitt ist geeigneterweise elektrisch und mechanisch mit dem Innenleiter verbunden. Die Verbindung zwischen dem Anschlussleiterabschnitt und dem Innenleiter kann beispielsweise eine Schweißverbindung sein. Das Kontaktsystem kann beispielsweise Kontaktlamellen zur elektrischen Kontaktierung umfassen. Das Kontaktsystem kann zum Beispiel zwischen dem Anschlussleiterabschnitt und einem leitenden Anschlussteil der Durchführungsbuchse angeordnet sein, so dass die elektrische Verbindung zwischen der Hochspannungsdurchführung und der Durchführungsbuchse über das Kontaktsystem verläuft. Der Teilhohlraum des Anschlussleiterabschnitts kann beispielsweise als eine einseitig offene Bohrung beziehungsweise Ausnehmung ausgebildet sein.

Die Erfindung betrifft ferner eine Hochspannungsanlage mit einem elektrischen Gerät und einer steckbaren Hochspannungsdurchführung.

Eine solche Hochspannungsanlage, bei der das elektrische Gerät ein Hochspannungstransformator ist, ist aus der zuvor bereits genannten Druckschrift DE 10 2007 022 641 A1 bekannt.

Die Aufgabe der Erfindung ist es, eine artgemäße Hochspannungsanlage anzugeben, die möglichst zuverlässig ist.

Die Aufgabe wird dadurch gelöst, dass für die Hochspannungsanlage eine erfindungsgemäße Hochspannungsdurchführung verwendet wird.

Die Vorteile der erfindungsgemäßen Hochspannungsanlage ergeben sich insbesondere aus den zuvor beschriebenen Vorteilen der erfindungsgemäßen Hochspannungsdurchführung.

Gemäß einer Ausführungsform der Erfindung weist das elektrische Gerät ein Gehäuse auf, das mit einem flüssigen oder gasförmigen Isoliermittel zumindest teilweise gefüllt ist, wobei das Gehäuse unter Verwendung der Durchführungsbuchse isoliermitteldicht abgeschlossen ist.

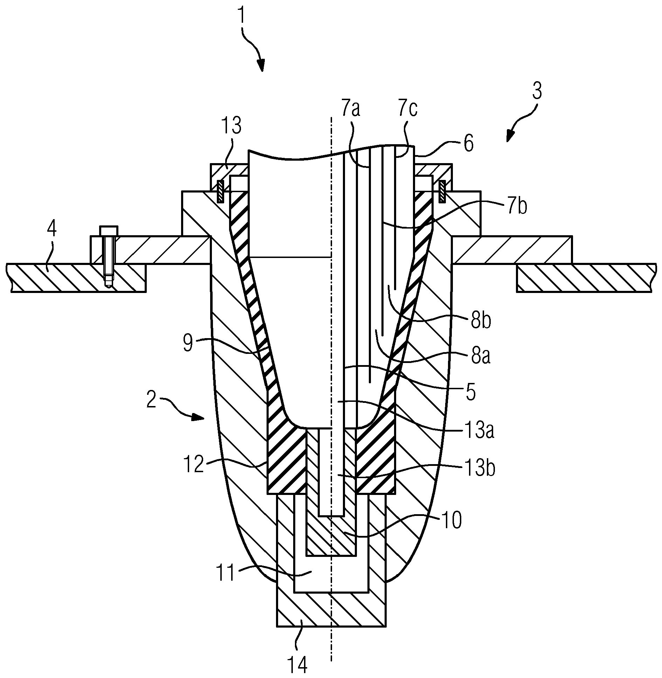

Die Erfindung wird im Folgenden anhand eines in der Figur dargestellten Ausführungsbeispiels weiter erläutert.

Figur zeigt ein Ausführungsbeispiel einer erfindungsgemäßen Hochspannungsanlage mit einer erfindungsgemäßen Hochspannungsdurchführung in einer schematischen Darstellung.

Im Einzelnen ist in der Figur ein Teilausschnitt einer steckbaren Hochspannungsdurchführung 1 dargestellt. Die Hochspanungsdurchführung ist in der Darstellung der Figur in eine Durchführungsbuchse 2 eines elektrischen Gerätes einer Hochspannungsanlage in Form eines Transformators 3 eingesteckt. Die Durchführungsbuchse 2 ist an einer Gehäusewandung 4 befestigt. Die Gehäusewandung 4 begrenzt ein Transformatorgehäuse des Transformators 3, das mit einem Isoliermittel, beispielsweise Isolieröl, befüllt ist. Die Befestigung ist isoliermitteldicht ausgeführt, so dass das Isoliermittel nicht aus dem Gehäuse austreten kann. Die Durchführungsbuchse 2 umfasst einen leitenden Anschlussteil 14 zur Herstellung einer elektrischen Verbindung zwischen der Hochspannungsdurchführung 1 und des elektrischen Gerätes 3.

Die Hochspannungsdurchführung 1 umfasst einen Innenleiter 5, der als Hohlleiter aus Aluminium oder Kupfer ausgebildet ist. Der Innenleiter 5 ist von einem Isolierkörper 6 umgeben. Der Isolierkörper 6 umfasst leitende Steuereinlagen 7a-c zur kapazitiven Feldsteuerung, die konzentrisch um den Innenleiter 5 angeordnet sind. Die Steuereinlagen 7a-c sind durch Isolierfolien 8a-b aus Papier voneinander getrennt, die nach dem Aufwickeln auf den Innenleiter 5 in Harz getränkt sind.

Die Hochspannungsdurchführung 1 umfasst ferner einen Steckabschnitt 9 zum Einstecken der Hochspannungsdurchführung 1 in die Durchführungsbuchse 2. Der Steckabschnitt 9 umfasst einen sich konisch verjüngenden Teil des Isolierkörpers sowie einen Anschlussleiterabschnitt, der in Form eines Leiterbolzens 10 mit dem Innenleiter 5 verschweißt ist. An den Leiterbolzen 10 schließt sich ein Kontaktsystem 11 an, das die elektrische Verbindung zwischen der Hochspannungsdurchführung 1 und dem Transformator 3 herstellt.

Ein Zwischenraum 12 zwischen dem Steckabschnitt 9 der Hochspannungsdurchführung 1 und der Durchführungsbuchse 2 ist mit einem Silikonmaterial ausgefüllt, das den Zwischenraum 12 dielektrisch verfestigt.

Die Hochspannungsdurchführung 1 ist mittels eines Befestigungsflansches 13 mit der Gehäusewandung 4 des Transformators 3 verbunden. Der Steckabschnitt 9 erstreckt sich somit axial von dem Befestigungsflansch 13 zur Befestigung der Hochspannungsdurchführung 1 an der Durchführungsbuchse 2 bis zum Kontaktsystem 11.

Der Innenleiter 5 ist als Hohlleiter ausgebildet und bildet ein Wärmerohr zur Minimierung des Temperaturgradienten in der Hochspannungsdurchführung 1. Der Innenleiter 5 begrenzt einen Hohlraum, der ein erster Teilhohlraum 13a des Wärmerohres ist, der teilweise mit einer Kühlflüssigkeit gefüllt ist. Der Leiterbolzen 10 weist eine Bohrung auf, die ein zweiter Teilhohlraum 13b des Wärmerohres ist. Die Teilhohlräume 13a,b sind miteinander verbunden, so dass Zirkulation der Kühlflüssigkeit im gesamten Leiterhohlraum problemlos möglich ist. Die kühlmitteldichte Verbindung zwischen dem Leiterbolzen 10 und dem Innenleiter 5 an der einen Seite der Hochspannungsdurchführung 1 und zwischen dem Innenleiter 5 und einem Abschlussteil (in der Figur nicht dargestellt) an der anderen, der Durchführungsbuchse abgewandten Stirnseite der Hochspannungsdurchführung 1 verhindert einen Austritt der verdampfenden Kühlflüssigkeit aus dem Hohlraum 13a,b des Wärmerohres. Dadurch, dass sich das Wärmerohr bis in den Steckabschnitt 9 der Hochspannungsdurchführung 1, und insbesondere in den Leiterbolzen 10 hinein erstreckt, ist für eine vorteilhafte Kühlung des Steckabschnitts 9 gesorgt. Es ist erkennbar, dass der Teilhohlraum 13b bis in das Kontaktsystem 11 hinein verläuft. Auf diese Weise kann Wärme auch von dem Kontaktsystem 11 mittels Verdampfung der Kühlflüssigkeit abgeführt werden.

Die in der Figur dargestellte Hochspanungsdurchführung 1 eignet sich beispielsweise für einen Betriebs bei Spannungen oberhalb von 550 kV.

## Patentansprüche

1. Steckbare Hochspannungsdurchführung (1) mit
- einem Innenleiter (5), der sich in einer Längsrichtung zwischen einem Hochspannungsanschluss und einem Steckabschnitt (9) der Hochspannungsdurchführung (1) erstreckt, wobei der Steckabschnitt (9) zum Einstecken der Hochspannungsdurchführung (1) in eine Durchführungsbuchse (2) eines elektrischen Gerätes (3) eingerichtet ist,
- einem Isolierkörper (6), der den Innenleiter (5) zumindest teilweise umschließt,
**dadurch gekennzeichnet, dass**
der Innenleiter (5) ein Wärmerohr (5, 10, 13ab) aufweist, das zumindest teilweise mit einer verdampfbaren Kühlflüssigkeit gefüllt ist, wobei sich das Wärmerohr (5, 10, 13a, b) in den Steckabschnitt (9) hinein erstreckt, wobei die Hochspannungsdurchführung (1) ferner ein Kontaktsystem (11) zur elektrischen Kontaktierung der Hochspannungsdurchführung (1) mit einem Anschlussteil (14) der Durchführungsbuchse (2) umfasst, wobei sich das Wärmerohr (5, 10, 13ab) bis in den Bereich des Kontaktsystems (11) erstreckt.

2. Hochspannungsdurchführung (1) nach Anspruch 1, wobei der Isolierkörper (6) konzentrisch um den Innenleiter (5) angeordnete, leitende Steuereinlagen (7a-c) umfasst, und wobei die Steuereinlagen (7a-c) durch Isolierlagen (8a, b) voneinander getrennt sind.

3. Hochspannungsdurchführung (1) nach Anspruch 2, wobei der Isolierkörper (6) ein ausgehärtetes Harz umfasst.

4. Hochspannungsdurchführung (1) nach einem der Ansprüche 2 oder 3, wobei zumindest einige der Steuereinlagen (7a-c) sich in den Steckabschnitt (9) der Hochspannungsdurchführung (1) hinein erstrecken.

5. Hochspannungsdurchführung (1) nach einem der vorangehenden Ansprüche, wobei der Steckabschnitt (9) eine Außenbeschichtung (12) aus einem elastischen isolierenden Beschichtungsmaterial aufweist.

6. Hochspannungsdurchführung (1) nach einem der vorangehenden Ansprüche, wobei die Kühlflüssigkeit entionisiertes Wasser ist.

7. Hochspannungsdurchführung (1) nach einem der vorangehenden Ansprüche, wobei die Hochspannungsdurchführung (1) ferner einen Befestigungsflansch (13) zur Befestigung der Hochspannungsdurchführung (1) an einem Gehäuse (4) des elektrischen Gerätes (3) umfasst.

8. Hochspannungsdurchführung (1) nach einem der vorangehenden Ansprüche, wobei der Innenleiter (5) als Hohlleiter ausgebildet ist, wobei der Hohlleiter an einer ersten Stirnseite gasdicht abgeschlossen ist, und wobei sich an eine zweite Stirnseite des Hohlleiters ein Anschlussleiterabschnitt (10) anschließt, wobei der Anschlussleiterabschnitt (10) dazu eingerichtet ist, in Zusammenwirkung mit einem Kontaktsystem (11) der Hochspannungsdurchführung (1) einen elektrischen Kontakt zwischen der Hochspannungsdurchführung (1) und der Durchführungssteckbuchse (2) herzustellen, und der Anschlussleiterabschnitt (10) einen zur zweiten Stirnseite des Hohlleiters offenen Teilhohlraum (13b) aufweist, der einen Hohlraum des Wärmerohrs (5, 10, 13a, b) teilweise ausbildet.

9. Hochspannungsanlage mit einem elektrischen Gerät (3) und einer Hochspannungsdurchführung (1) nach einem der Ansprüche 1 bis 8, wobei das elektrisches Gerät (3) eine Durchführungsbuchse (2) zur Aufnahme der Hochspannungsdurchführung (1) umfasst.

10. Hochspannungsanlage nach Anspruch 9, wobei das elektrische Gerät (3) ein Gehäuse (4) aufweist, das mit einem flüssigen oder gasförmigen Isoliermittel zumindest teilweise gefüllt ist, wobei das Gehäuse (4) unter Verwendung der Durchführungsbuchse (2) isoliermitteldicht abgeschlossen ist

## Claims

1. Pluggable high-voltage bushing (1) having
- an internal conductor (5), which extends in a longitudinal direction between a high-voltage connection and a plug-in section (9) of the high-voltage bushing (1), wherein the plug-in section (9) is configured for plugging the high-voltage bushing (1) into a bushing socket (2) of an electrical device (3),
- an insulating body (6), which at least partly encloses the internal conductor (5),
**characterized in that**
the internal conductor (5) has a heat pipe (5, 10, 13ab), which is at least partly filled with a vaporizable cooling liquid, wherein the heat pipe (5, 10, 13a, b) extends into the plug-in section (9), wherein the high-voltage bushing (1) also comprises a contact system (11) for electrical contacting of the high-voltage bushing (1) to a connection part (14) of the bushing socket (2), wherein the heat pipe (5, 10, 13ab) extends into the region of the contact system (11).

2. High-voltage bushing (1) according to Claim 1, wherein the insulating body (6) comprises conductive control inserts (7a-c) arranged concentrically around the internal conductor (5), and wherein the control inserts (7a-c) are isolated from one another by insulating layers (8a, b).

3. High-voltage bushing (1) according to Claim 2, wherein the insulating body (6) comprises a cured resin.

4. High-voltage bushing (1) according to either of Claims 2 and 3, wherein at least some of the control inserts (7a-c) extend into the plug-in section (9) of the high-voltage bushing (1).

5. High-voltage bushing (1) according to one of the preceding claims, wherein the plug-in section (9) has an external coating (12) composed of an elastic insulating coating material.

6. High-voltage bushing (1) according to one of the preceding claims, wherein the cooling liquid is deionized water.

7. High-voltage bushing (1) according to one of the preceding claims, wherein the high-voltage bushing (1) also comprises a fastening flange (13) for fastening the high-voltage bushing (1) to a housing (4) of the electrical device (3).

8. High-voltage bushing (1) according to one of the preceding claims, wherein the internal conductor (5) is designed as a waveguide, wherein the waveguide is sealed in a gas-tight manner at a first end side, and wherein a connecting conductor section (10) adjoins a second end side of the waveguide, wherein the connecting conductor section (10) is configured, in cooperation with a contact system (11) of the high-voltage bushing (1), to produce an electrical contact between the high-voltage bushing (1) and the bushing plug socket (2) and the connecting conductor section (10) has a partial cavity (13b) that is open toward the second end side of the waveguide, which partial cavity partly forms a cavity of the heat pipe (5, 10, 13a, b).

9. High-voltage installation having an electrical device (3) and a high-voltage bushing (1) according to one of Claims 1 to 8, wherein the electrical device (3) comprises a bushing socket (2) for holding the high-voltage bushing (1).

10. High-voltage installation according to Claim 9, wherein the electrical device (3) has a housing (4), which is at least partly filled with a liquid or gaseous insulating means, wherein the housing (4) is sealed in an insulating-means-tight manner using the bushing socket (2).

## Revendications

1. Traversée (1) de haute tension enfichable, comprenant
- un conducteur (5) intérieur, qui s'étend dans une direction longitudinale entre une borne de haute tension et une partie (9) d'enfichage de la traversée (1) de haute tension, la partie (9) d'enfichage étant conçue pour l'enfichage de la traversée (1) de haute tension dans un passe-fil (2) d'un appareil (3) électrique,
- un corps (6) isolant, qui entoure, au moins en partie, le conducteur (5) intérieur,
**caractérisée en ce que**
le conducteur (5) intérieur a un caloduc (5, 10, 13ab) empli, au moins en partie, d'un liquide de refroidissement pouvant s'évaporer, le caloduc (5, 10, 13a, b) s'étendant dans la partie (9) d'enfichage, la traversée (1) de haute tension comprenant, en outre, un système (11) de contact pour la mise en contact électrique de la traversée (1) de haute tension avec une partie (14) de connexion du passe-fil (2), le caloduc (5, 10, 13ab) s'étendant jusqu'à la région du système (11) de contact.

2. Traversée (1) de haute tension suivant la revendication 1, dans laquelle le corps (6) isolant comprend des inserts (7a-c) de commande, conducteurs et disposés concentriquement autour du conducteur (5) intérieur, les inserts (7a-c) de commande étant séparés les uns des autres par des couches (8a, b) isolantes.

3. Traversée (1) de haute tension suivant la revendication 2, dans laquelle le corps (6) isolant comprend une résine durcie.

4. Traversée (1) de haute tension suivant l'une des revendications 2 ou 3, dans laquelle au moins certains des inserts (7a-c) de commande s'étendent dans la partie (9) d'enfichage de la traversée (1) de haute tension.

5. Traversée (1) de haute tension suivant l'une des revendications précédentes, dans laquelle la partie (9) d'enfichage a un revêtement (12) extérieur en une matière de revêtement isolante et élastique.

6. Traversée (1) de haute tension suivant l'une des revendications précédentes, dans laquelle le liquide de refroidissement est de l'eau déminéralisée.

7. Traversée (1) de haute tension suivant l'une des revendications précédentes, dans laquelle la traversée (1) de haute tension comprend, en outre, une bride (13) de fixation pour la fixation de la traversée (1) de haute tension à un boîtier (4) de l'appareil (3) électrique.

8. Traversée (1) de haute tension suivant l'une des revendications précédentes, dans laquelle le conducteur (5) intérieur est constitué sous la forme d'un conducteur creux, le conducteur creux étant fermé de manière étanche au gaz à un premier côté frontal et un tronçon (10) de conducteur de connexion se raccordant à un deuxième côté frontal du conducteur creux, le tronçon (10) de conducteur de connexion étant conçu pour, en coopération avec un système (11) de contact de la traversée (1) de haute tension, donner un contact électrique entre la traversée (1) de haute tension et le passe-fil (2) d'enfichage et le tronçon (10) du conducteur de connexion ayant un espace (13b) creux partiel ouvert vers le deuxième côté frontal du conducteur creux et formant en partie un espace creux du caloduc (5, 10, 13a, b).

9. Installation de haute tension comprenant un appareil (3) électrique et une traversée (1) de haute tension suivant l'une des revendications 1 à 8, l'appareil (3) électrique comprenant un passe-fil (2) de réception de la traversée (1) de haute tension.

10. Installation de haute tension suivant la revendication 9, dans laquelle l'appareil (3) électrique a un boîtier (4), qui est empli, au moins en partie, d'un fluide isolant liquide ou gazeux, le boîtier (4) étant fermé d'une manière étanche au fluide isolant, en utilisant le passe-fil (2).
